# EUROPEAN PATENT APPLICATION

(11) **EP 3 034 249 A1**
(43) Date of publication of application: **22.06.2016**
(21) Application number: 15187280.1
(22) Date of filing: 29.09.2015
(51) Int. Cl.: B25J 9/16

(54) **MACHINING APPARATUS, METHOD FOR MAKING INSTRUCTION, METHOD FOR PRODUCING WORKPIECE, CONTROLLER, AND METHOD FOR CONTROL**

(30) Priority: 29.10.2014 JP 2014220651
(71) Applicant: Kabushiki Kaisha Yaskawa Denki, Kitakyushu-shi, Fukuoka 806-0004 (JP)
(72) Inventor: OKAHISA, Manabu, Kitakyushu-shi, Fukuoka 806-0004 (JP); NAKAKURA, Masami, Kitakyushu-shi, Fukuoka 806-0004 (JP)
(74) Representative: Viering, Jentschura & Partner mbB Patent- und Rechtsanwälte

(57) **Abstract**

A machining apparatus (1) includes a robot (10) and a controller (100). A target acquirer (111) acquires a target value of a position and posture of a distal end (16) of the robot (10). With a movement target value of a distance adjustment actuator (27) of the robot (10) being fixed, a first calculator (112) calculates movement target values of first to third actuators (21, 22, 23) and posture adjustment actuators (24, 25, 26) of the robot (10) corresponding to the target value of the position and posture of the distal end (16). A determiner (113) determines whether a movement target value of one of the actuators (21- 26) is within an allowable range. When out of the allowable range, a second calculator (114) calculates the movement target values of all actuators (21- 27) corresponding to the target value of the position and posture of the distal end (16) to cause the movement target value to fall within the range. An outputter (115) controls the actuators in accordance with the respective movement target values.

## Description

### BACKGROUND

### FIELD OF THE INVENTION

The present invention relates to a machining apparatus, a method for making an instruction, a method for producing a workpiece, a controller, and a method for control.

### DISCUSSION OF THE BACKGROUND

Japanese Unexamined Patent Application Publication No. 2008-279496 discloses a spot welder that includes a workpiece stand and a robot. The workpiece stand holds a workpiece such as an automobile body panel. The robot performs spot welding of the workpiece.

The contents of Japanese Unexamined Patent Application Publication No. 2008-279496 are incorporated herein by reference in their entirety.

In production facilities where machining apparatuses use robots, it is necessary to arrange the robots in a limited space and at the same time prevent the robots from interfering with workpieces or surroundings. In order to construct production facilities that involve precise arrangement of robots and movement instructions of the robots, high degrees of proficiency and skillfulness are required. It is an object of the present disclosure to provide a machining apparatus, a method for making an instruction, a method for producing a workpiece, a controller, and a method for control that facilitate construction of production facilities.

### SUMMARY

According to one aspect of the present disclosure, a machining apparatus includes a robot and a controller. The robot is configured to machine a workpiece. The robot includes a turnable portion, a first arm, a second arm, a wrist, a distal end, a first actuator, a second actuator, a third actuator, a plurality of posture adjustment actuators, and a distance adjustment actuator. The first arm is coupled in series to the turnable portion. The second arm is coupled in series to the turnable portion and the first arm. The wrist is coupled in series to the turnable portion, the first arm, and the second arm. The distal end is coupled in series to the turnable portion, the first arm, the second arm, and the wrist. The first actuator is configured to turn the turnable portion about a first axis. The second actuator is configured to swing the first arm about a second axis. The third actuator is configured to swing the second arm about a third axis. The plurality of posture adjustment actuators are configured to adjust a posture of the distal end. The distance adjustment actuator is configured to adjust a distance between the second axis and the third axis. The controller is configured to control the robot, and includes a target acquirer, a first calculator, a determiner, a second calculator, and an outputter. The target acquirer is configured to acquire a target value of a position and posture of the distal end. The first calculator is configured to, under such a condition that a movement target value of the distance adjustment actuator is fixed, calculate movement target values of the first to third actuators and movement target values of the plurality of posture adjustment actuators corresponding to the target value of the position and posture of the distal end. The determiner is configured to determine at least one actuator among the first to third actuators and the plurality of posture adjustment actuators as a determination subject, and is configured to make a determination as to whether a movement target value of the at least one actuator determined as the determination subject is within an allowable range. The second calculator is configured to, when the movement target value of the at least one actuator determined as the determination subject is out of the allowable range, calculate the movement target values of the first to third actuators, the movement target values of the plurality of posture adjustment actuators, and the movement target value of the distance adjustment actuator corresponding to the target value of the position and posture of the distal end so as to cause the movement target value of the at least one actuator determined as the determination subject to fall within the allowable range. The outputter is configured to control the first to third actuators, the plurality of posture adjustment actuators, and the distance adjustment actuator in accordance with the respective movement target values of the first to third actuators, the plurality of posture adjustment actuators, and the distance adjustment actuator.

According to another aspect of the present disclosure, a machining apparatus includes a robot and a controller. The robot is configured to machine a workpiece. The robot includes a turnable portion, a first arm, a second arm, a wrist, a distal end, a first actuator, a second actuator, a third actuator, a plurality of posture adjustment actuators, and a distance adjustment actuator. The first arm is coupled in series to the turnable portion. The second arm is coupled in series to the turnable portion and the first arm. The wrist is coupled in series to the turnable portion, the first arm, and the second arm. The distal end is coupled in series to the turnable portion, the first arm, the second arm, and the wrist. The first actuator is configured to turn the turnable portion about a first axis. The second actuator is configured to swing the first arm about a second axis. The third actuator is configured to swing the second arm about a third axis. The plurality of posture adjustment actuators are configured to adjust a posture of the distal end. The distance adjustment actuator is configured to adjust a distance between the second axis and the third axis. The controller is configured to acquire a target value of a position and posture of the distal end. The controller is configured to calculate, under such a condition that a movement target value of the distance adjustment actuator is fixed, movement target values of the first to third actuators and movement target values of the plurality of posture adjustment actuators corresponding to the target value of the position and posture of the distal end. The controller is configured to determine at least one actuator among the first to third actuators and the plurality of posture adjustment actuators as a determination subject, and make a determination as to whether a movement target value of the at least one actuator determined as the determination subject is within an allowable range. The controller is configured to calculate, when the movement target value of the at least one actuator determined as the determination subject is out of the allowable range, the movement target values of the first to third actuators, the movement target values of the plurality of posture adjustment actuators, and the movement target value of the distance adjustment actuator corresponding to the target value of the position and posture of the distal end so as to cause the movement target value of the at least one actuator determined as the determination subject to fall within the allowable range. The controller is configured to control the first to third actuators, the plurality of posture adjustment actuators, and the distance adjustment actuator in accordance with the respective movement target values of the first to third actuators, the plurality of posture adjustment actuators, and the distance adjustment actuator, so as to control the robot.

According to another aspect of the present disclosure, a method for making an instruction using the above-described machining apparatus includes inputting the target value of the position and posture of the distal end into the controller. The movement target values of the first to third actuators, the movement target values of the plurality of posture adjustment actuators, and the movement target value of the distance adjustment actuator corresponding to the target value of the position and posture of the distal end are stored in the controller, after the movement target values have been calculated by the controller.

According to another aspect of the present disclosure, a method is for producing a workpiece using a robot. The robot includes a turnable portion, a first arm, a second arm, a wrist, a distal end, a first actuator, a second actuator, a third actuator, a plurality of posture adjustment actuators, and a distance adjustment actuator. The first arm is coupled in series to the turnable portion. The second arm is coupled in series to the turnable portion and the first arm. The wrist is coupled in series to the turnable portion, the first arm, and the second arm. The distal end is coupled in series to the turnable portion, the first arm, the second arm, and the wrist. The first actuator is configured to turn the turnable portion about a first axis. The second actuator is configured to swing the first arm about a second axis. The third actuator is configured to swing the second arm about a third axis. The plurality of posture adjustment actuators are configured to adjust a posture of the distal end. The distance adjustment actuator is configured to adjust a distance between the second axis and the third axis. The method includes acquiring a target value of a position and posture of the distal end. Under such a condition that a movement target value of the distance adjustment actuator is fixed, movement target values of the first to third actuators and movement target values of the plurality of posture adjustment actuators corresponding to the target value of the position and posture of the distal end are calculated. At least one actuator among the first to third actuators and the plurality of posture adjustment actuators is determined as a determination subject, and a determination is made as to whether a movement target value of the at least one actuator determined as the determination subject is within an allowable range. When the movement target value of the at least one actuator determined as the determination subject is out of the allowable range, the movement target values of the first to third actuators, the movement target values of the plurality of posture adjustment actuators, and the movement target value of the distance adjustment actuator corresponding to the target value of the position and posture of the distal end are calculated so as to cause the movement target value of the at least one actuator determined as the determination subject to fall within the allowable range. The first to third actuators, the plurality of posture adjustment actuators, and the distance adjustment actuator are controlled in accordance with the respective movement target values of the first to third actuators, the plurality of posture adjustment actuators, and the distance adjustment actuator.

According to another aspect of the present disclosure, a controller includes a target acquirer, a first calculator, a determiner, a second calculator, and an outputter. The target acquirer is configured to acquire a target value of a position and posture of a distal end of a robot. The robot includes a turnable portion, a first arm, a second arm, a wrist, a distal end,
a first actuator, a second actuator, a third actuator, a plurality of posture adjustment actuators, and a distance adjustment actuator. The first arm is coupled in series to the turnable portion. The second arm is coupled in series to the turnable portion and the first arm. The wrist is coupled in series to the turnable portion, the first arm, and the second arm. The distal end is coupled in series to the turnable portion, the first arm, the second arm, and the wrist. The first actuator is configured to turn the turnable portion about a first axis. The second actuator is configured to swing the first arm about a second axis. The third actuator is configured to swing the second arm about a third axis. The plurality of posture adjustment actuators are configured to adjust a posture of the distal end. The distance adjustment actuator is configured to adjust a distance between the second axis and the third axis. The first calculator is configured to, under such a condition that a movement target value of the distance adjustment actuator is fixed, calculate movement target values of the first to third actuators and movement target values of the plurality of posture adjustment actuators corresponding to the target value of the position and posture of the distal end. The determiner is configured to determine at least one actuator among the first to third actuators and the plurality of posture adjustment actuators as a determination subject, and is configured to make a determination as to whether a movement target value of the at least one actuator determined as the determination subject is within an allowable range. The second calculator is configured to, when the movement target value of the at least one actuator determined as the determination subject is out of the allowable range, calculate the movement target values of the first to third actuators, the movement target values of the plurality of posture adjustment actuators, and the movement target value of the distance adjustment actuator corresponding to the target value of the position and posture of the distal end so as to cause the movement target value of the at least one actuator determined as the determination subject to fall within the allowable range. The outputter is configured to control the first to third actuators, the plurality of posture adjustment actuators, and the distance adjustment actuator in accordance with the respective movement target values of the first to third actuators, the plurality of posture adjustment actuators, and the distance adjustment actuator.

According to the other aspect of the present disclosure, a method for control includes acquiring a target value of a position and posture of a distal end of a robot. The robot includes a turnable portion, a first arm, a second arm, a wrist, a distal end, a first actuator, a second actuator, a third actuator, a plurality of posture adjustment actuators, and a distance adjustment actuator. The first arm is coupled in series to the turnable portion. The second arm is coupled in series to the turnable portion and the first arm. The wrist is coupled in series to the turnable portion, the first arm, and the second arm. The distal end is coupled in series to the turnable portion, the first arm, the second arm, and the wrist. The first actuator is configured to turn the turnable portion about a first axis. The second actuator is configured to swing the first arm about a second axis. The third actuator is configured to swing the second arm about a third axis. The plurality of posture adjustment actuators are configured to adjust a posture of the distal end. The distance adjustment actuator is configured to adjust a distance between the second axis and the third axis. Under such a condition that a movement target value of the distance adjustment actuator is fixed, movement target values of the first to third actuators and movement target values of the plurality of posture adjustment actuators corresponding to the target value of the position and posture of the distal end are calculated. At least one actuator among the first to third actuators and the plurality of posture adjustment actuators is determined as a determination subject, and a determination is made as to whether a movement target value of the at least one actuator determined as the determination subject is within an allowable range. When the movement target value of the at least one actuator determined as the determination subject is out of the allowable range, the movement target values of the first to third actuators, the movement target values of the plurality of posture adjustment actuators, and the movement target value of the distance adjustment actuator corresponding to the target value of the position and posture of the distal end are calculated so as to cause the movement target value of the at least one actuator determined as the determination subject to fall within the allowable range. The first to third actuators, the plurality of posture adjustment actuators, and the distance adjustment actuator are controlled in accordance with the respective movement target values of the first to third actuators, the plurality of posture adjustment actuators, and the distance adjustment actuator.

The embodiments facilitate construction of production facilities.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a diagram illustrating a schematic configuration of a machining apparatus;
FIG. 2 is a diagram illustrating a hardware structure of a controller;
FIG. 3 is a flowchart of a machining procedure using a robot;
FIG. 4 is a flowchart of a procedure for forming a movement pattern;
FIG. 5 is a diagram illustrating a function of a distance adjustment actuator;
FIG. 6 is a perspective view of robots in another exemplary arrangement; and
FIG. 7 is a perspective view of robots in still another exemplary arrangement.

### DESCRIPTION OF THE EMBODIMENTS

The embodiments will now be described with reference to the accompanying drawings, wherein like reference numerals designate corresponding or identical elements throughout the various drawings.

### Machining Apparatus

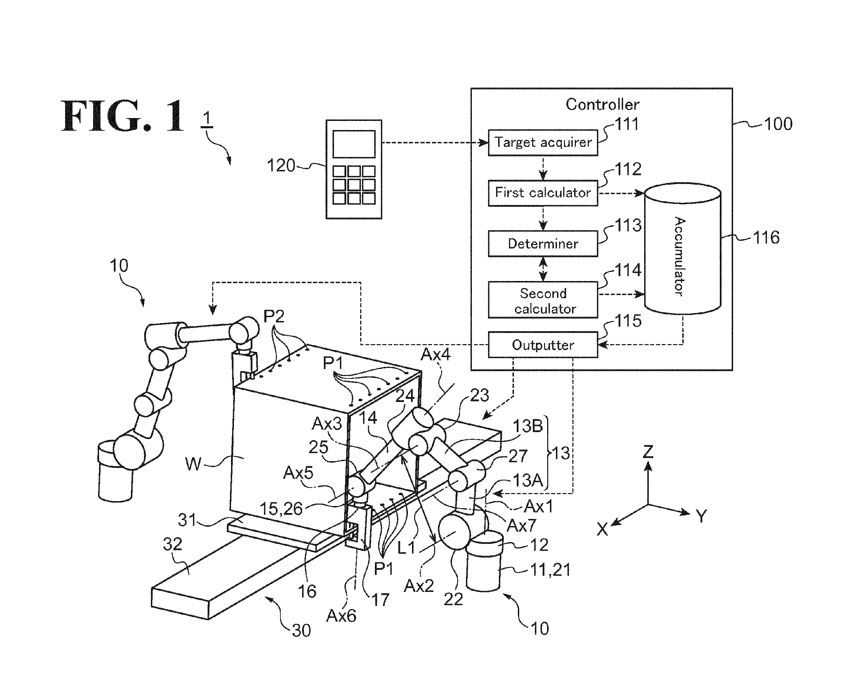

As illustrated in FIG. 1, a machining apparatus 1 includes two robots 10, a conveyor 30, a controller 100, and a programming pendant 120.

### Robots and Conveyor

The robots 10 machine a workpiece W such as the body of an automobile. The robots 10 each include, for example, a base 11, a turnable portion 12, a first arm 13, a second arm 14, a wrist 15, a distal end 16, an end effector 17, a first actuator 21, a second actuator 22, a third actuator 23, a fourth actuator 24, a fifth actuator 25, a sixth actuator 26, and a seventh actuator 27.

The base 11 is secured on the floor (installation surface) and supports the whole robot 10.

The turnable portion 12, the first arm 13, the second arm 14, the wrist 15, and the distal end 16 are coupled in series to each other. The turnable portion 12 is disposed on the base 11 and turnable about a vertical first axis Ax1 (which is along the z-axis in FIG. 1).

The first arm 13 is swingable about a horizontal second axis Ax2, which passes through a portion where the turnable portion 12 and the first arm 13 are coupled to each other.

The second arm 14 is swingable about a horizontal third axis Ax3, which passes through a portion where the first arm 13 and the second arm 14 are coupled to each other. The third axis Ax3 is parallel to the second axis Ax2. The second arm 14 is turnable about a fourth axis Ax4, which is along the center axis of the second arm 14.

The wrist 15 is swingable about a fifth axis Ax5, which passes through a portion where the second arm 14 and the wrist 15 are coupled to each other.

The distal end 16 is turnable about a six axis Ax6, which is along the center axis of the wrist 15.

An example of the end effector 17 is a spot welder attached to the distal end 16. For example, the end effector 17 is detachably attached to the distal end 16 and replaceable with other end effectors. The end effector 17 may be integral to the distal end 16. The end effector 17 will not be limited to the spot welder but may be any other machining tool. Examples of the end effector 17 include, but are not limited to, arc welders, and cutters and screw devices to perform work other than welding.

In this embodiment, the first arm 13 is made up of links 13A and 13B, which are coupled in series to each other. The link 13A is coupled to the turnable portion 12, and the link 13B is coupled to the second arm 14. The first arm 13 is bendable about a seventh axis Ax7, which passes through a portion where the links 13A and 13B are coupled to each other. In other words, the link 13B is swingable about the seventh axis Ax7, which passes through the portion where the links 13A and 13B are coupled to each other. The seventh axis Ax7 is parallel to the second axis Ax2 and to the third axis Ax3.

The first actuator 21 is disposed in, for example, the base 11 and turns the turnable portion 12 about the first axis Ax1.

The second actuator 22 is disposed between, for example, the turnable portion 12 and the first arm 13, and swings the first arm 13 about the second axis Ax2.

The third actuator 23 is disposed between, for example, the first arm 13 and the second arm 14, and swings the second arm 14 about the third axis Ax3.

The fourth actuator 24 is disposed on, for example, the proximal end of the second arm 14, and turns the second arm 14 about the fourth axis Ax4. Since the wrist 15 is coupled to the second arm 14, turning the second arm 14 is equivalent to turning the wrist 15. That is, the fourth actuator 24 turns the wrist 15 about the fourth axis Ax4.

The fifth actuator 25 is disposed between, for example, the second arm 14 and the wrist 15, and swings the wrist 15 about the fifth axis Ax5.

The sixth actuator 26 is disposed in, for example, the wrist 15, and turns the distal end 16 about the sixth axis Ax6.

The fourth actuator 24, the fifth actuator 25, and the sixth actuator 26 are examples of the plurality of posture adjustment actuators to adjust the posture of the distal end 16.

The seventh actuator 27 is disposed in, for example, the portion where the links 13A and 13B are coupled to each other, and bends the first arm 13 about the seventh axis Ax7. In other words, the seventh actuator 27 swings the link 13B about the seventh axis Ax7. The seventh actuator 27 is an example of the distance adjustment actuator, and bends the first arm 13 about the seventh axis Ax7 for distance adjustment to adjust the distance, *L1*, between the second axis Ax2 and the third axis Ax3.

Thus, the robot 10 is a combination of what is called a six-axis robot capable of changing, as desired, the position and posture of the distal end 16 and a redundant degree of freedom to adjust the distance *L1* between the second axis Ax2 and the third axis Ax3. The actuators 21 to 26 are made up of components such as electric servomotors, gear heads, and brakes. The servomotors, gear heads, and brakes may not necessarily be arranged on the axes Ax1 to Ax7 but may be arranged at positions apart from the axes Ax1 to Ax7.

The conveyor 30 conveys the workpiece W to change the position of the workpiece W relative to the positions of the robots 10. The conveyor 30 includes, for example, a pallet 31 and a conveyance actuator 32. The pallet 31 supports the workpiece W. The conveyance actuator 32 is driven by a motive power source such as an electric motor and a hydraulic motor to convey the pallet 31 along a horizontal straight line (along the x-axis in FIG. 1).

The two robots 10 are arranged on opposite sides of the workpiece W in a direction (direction along the y-axis in FIG. 1) perpendicular to the conveyance direction (direction along the x-axis in FIG. 1) of the conveyor 30. In the following description, the positive direction of the y-axis in FIG. 1 will be referred to as "leftward direction", and the negative direction of the y-axis in FIG. 1 will be referred to as "rightward direction". The left robot 10 machines to-be-machined portions P1, which are on the left of the workpiece W. The right robot 10 machines to-be-machined portions P2, which are on the right of the workpiece W.

The left robot 10 is arranged at a position where the left robot 10 is able to machine all the to-be-machined portions P1 without interfering with the workpiece W from the side (left side) on which the left robot 10 is arranged. For example, the left robot 10 is arranged at a position where the end effector 17 is able to reach both the upper to-be-machined portions P1 and the lower to-be-machined portions P1 without interfering with the workpiece W.

The right robot 10 is arranged at a position where the right robot 10 is able to machine all the to-be-machined portions P2 without interfering with the workpiece W from the robot 10 side (right side). For example, the right robot 10 is arranged at a position where the end effector 17 is able to reach both the upper to-be-machined portions P2 and the lower to-be-machined portions P2 without interfering with the workpiece W.

### Controller and Programming Pendant

The controller 100 controls the two robots 10 and the conveyor 30. The programming pendant 120 inputs and outputs data to and from the controller 100 in a wired or wireless manner.

A functional configuration of the controller 100 includes a target acquirer 111, a first calculator 112, a determiner 113, a second calculator 114, an outputter 115, and an accumulator 116.

The accumulator 116 accumulates movement patterns of the robots 10. An example of the movement pattern is time-series data of movement target values of the actuators 21 to 27.

The target acquirer 111 acquires a target value of the position and posture of the distal end 16 from the programming pendant 120. The target value of the position and posture acquired by the target acquirer 111 may be a value input to the programming pendant 120 by the user or a value read from a recording medium through the programming pendant 120.

Under such a condition that a movement target value of the seventh actuator 27 for distance adjustment is fixed at an initial value, the first calculator 112 calculates movement target values of the actuators 21 to 26 corresponding to the target value of the position and posture of the distal end 16, and stores the movement target values of the actuators 21 to 27 in the accumulator 116.

The movement target value of the seventh actuator 27 is a target value of the amount of movement to adjust the distance *L1* between the second axis Ax2 and the third axis Ax3. An example of the movement target value is a target value of the bending angle of the first arm 13. An initial value of the bending angle of the first arm 13 is, for example, 0 degree (°).

An example of the movement target value of the first actuator 21 is a target value of the turning angle of the turnable portion 12. An example of the movement target value of the second actuator 22 is a target value of the swinging angle of the first arm 13. An example of the movement target value of the third actuator 23 is a target value of the swinging angle of the second arm 14. An example of the movement target value of the fourth actuator 24 is a target value of the turning angle of the wrist 15. An example of the movement target value of the fifth actuator 25 is a target value of the swinging angle of the wrist 15. An example of the movement target value of the sixth actuator 26 is a target value of the turning angle of the distal end 16.

The movement target values of the actuators 21 to 26 are calculated by, for example, inverse kinematics calculation. The first calculator 112 stores, in the accumulator 116, calculation results of the movement target values of the actuators 21 to 27.

The determiner 113 determines at least one of the actuators 21 to 26 as a determination subject. Then, the determiner 113 makes a determination as to whether the movement target value of the determination-subject actuator calculated by the first calculator 112 is within an allowable range. The determiner 113 may determine, as determination subjects, all the actuators 21 to 26 or some of the actuators 21 to 26 (for example, the second actuator 22, the third actuator 23, and the fifth actuator 25). Another possible example is that the determiner 113 determines, as determination subjects, the third actuator 23 and the fifth actuator 25 or one of the third actuator 23 and the fifth actuator 25. The allowable range is set to keep the amount by which an element driven by the determination-subject actuator moves within a movable range of the element. For example, when the third actuator 23 is a determination subject, the allowable range of the movement target value of the third actuator 23 is set to keep the swinging angle of the second arm 14 within a movable range of the second arm 14.

When the movement target value of at least one determination-subject actuator is out of the allowable range of the at least one determination-subject actuator, the second calculator 114 calculates movement target values of the actuators 21 to 26 and the seventh actuator 27 for distance adjustment corresponding to the target value of the position and posture of the distal end 16 to cause the movement target value of the at least one determination-subject actuator fall within the allowable range of the at least one determination-subject actuator. Specifically, when the movement target value of an actuator is out of its allowable range, the second calculator 114 sets a constraint condition to cause this movement target value to fall within the allowable range of the actuator, and then calculates movement target values of the actuators 21 to 27 by inverse kinematics calculation to which the constraint condition is applied.

The second calculator 114 may set the constraint condition to bend the first arm 13 in a direction in which the seventh axis Ax7 for distance adjustment is moved away from the workpiece W. Then, the second calculator 114 may calculate movement target values of the actuators 21 to 27.

The second calculator 114 stores, in the accumulator 116, calculation results of the movement target values of the actuators 21 to 27, and overwrites the last calculation results.

The outputter 115 controls the actuators 21 to 27 in accordance with their movement target values. Specifically, the outputter 115 controls the actuators 21 to 27 to cause the amounts by which the actuators 21 to 27 move their respective elements to be approximately equal to the set movement target values. The outputter 115 controls the conveyance actuator 32, in addition to the actuators 21 to 27.

The hardware configuration of the controller 100 may not necessarily be divided into the target acquirer 111, the first calculator 112, the determiner 113, the second calculator 114, the outputter 115, and the accumulator 116 insofar as the controller 100 performs: acquiring a target value of the position and posture of the distal end 16; calculating movement target values of the actuators 21 to 26 corresponding to the target value of the position and posture under such a condition that the movement target value of the seventh actuator 27 for distance adjustment is fixed; determining at least one of the actuators 21 to 26 as a determination subject and making a determination as to whether the movement target value of the determination-subject actuator is within the allowable range of the determination-subject actuator; when the movement target value of at least one determination-subject actuator is determined as being out of the allowable range of the at least one determination-subject actuator, calculating movement target values of the actuators 21 to 26 and the seventh actuator 27 for distance adjustment corresponding to the target value of the position and posture of the distal end 16 to make the movement target value of the determination-subject actuator fall within its allowable range; and controlling the actuators 21 to 27 in accordance with the movement target values.

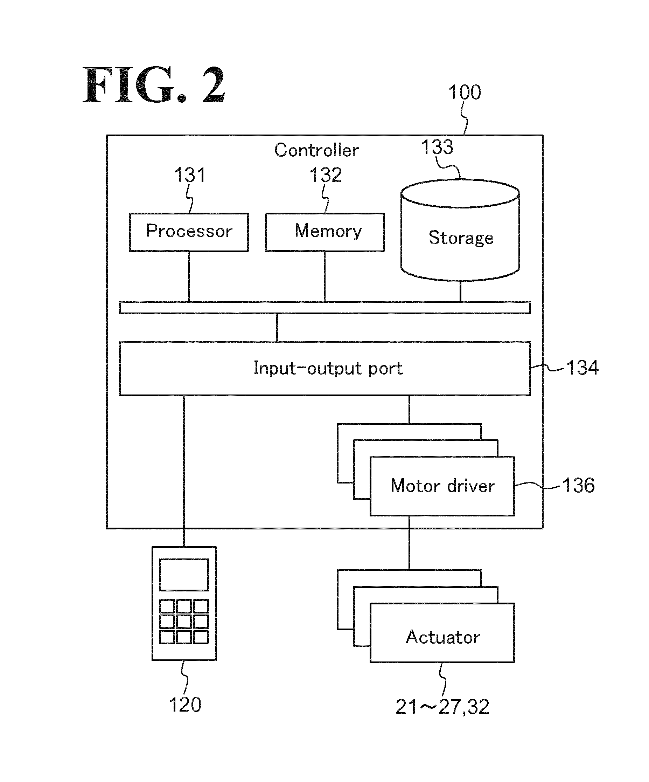

FIG. 2 is a diagram illustrating an exemplary hardware configuration of the controller 100. The controller 100 illustrated in FIG. 2 includes a processor 131, a memory 132, a storage 133, an input-output port 134, and a plurality of motor drivers 136. The input-output port 134 inputs and outputs data to and from the programming pendant 120 and the plurality of motor drivers 136. The plurality of motor drivers 136 respectively control the actuators 21 to 27 of the two robots 10 and the conveyance actuator 32. The processor 131 executes a program in cooperation with at least one of the memory 132 and the storage 133, and inputs and outputs data through the input-output port 134. In this manner, the processor 131 causes the controller 100 to function as the target acquirer 111, the first calculator 112, the determiner 113, the second calculator 114, the outputter 115, and the accumulator 116.

The hardware configuration of the controller 100 may not necessarily be by executing a program to implement the functions. Another possible embodiment is that at least some of the target acquirer 111, the first calculator 112, the determiner 113, the second calculator 114, the outputter 115, and the accumulator 116 are made up of logic circuits specialized in the respective functions, or made up of an application specific integrated circuit (ASIC) in which the logic circuits are integrated.

### Method for Control

Next, description will be made with regard to a procedure for controlling the robots 10 and the conveyor 30 using the controller 100, which is an example of the method for control according to this embodiment.

### Outline of Control Procedure

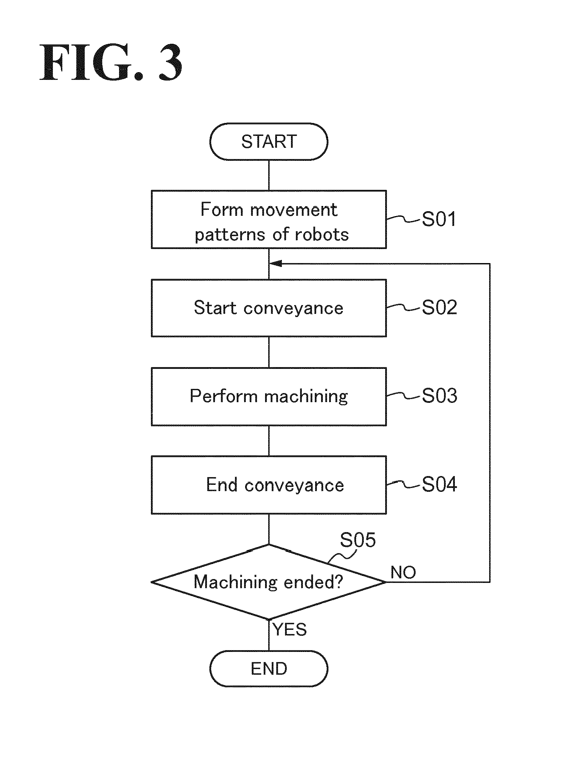

As illustrated in FIG. 3, the controller 100 first performs step S01. At step S01, at least one of the first calculator 112 and the second calculator 114 stores, in the accumulator 116, calculation results of movement target values of the actuators 21 to 27 to form movement patterns of the two robots 10. The movement patterns of the two robots 10 are formed to machine a workpiece W.

Next, the controller 100 performs steps S02 to S04. At step S02, the outputter 115 controls the conveyance actuator 32 to start conveying the workpiece W. At step S03, the outputter 115 controls the two robots 10 to machine the workpiece W. Specifically, the outputter 115 controls the actuators 21 to 27 of the two robots 10 in accordance with the movement target values stored in the accumulator 116. At step S04, the outputter 115 controls the conveyance actuator 32 to end conveying the workpiece W.

Next, the controller 100 performs step S05. At step S05, the outputter 115 makes a determination as to whether a command for ending the machining has been input. The command for ending the machining is input through, for example, the programming pendant 120. When the command for ending the machining has not been input, the controller 100 returns the processing to step S02. This causes the same machining procedure to be repeated. When the command for ending the machining has been input, the controller 100 ends the processing.

### Procedure for Forming Movement Patterns

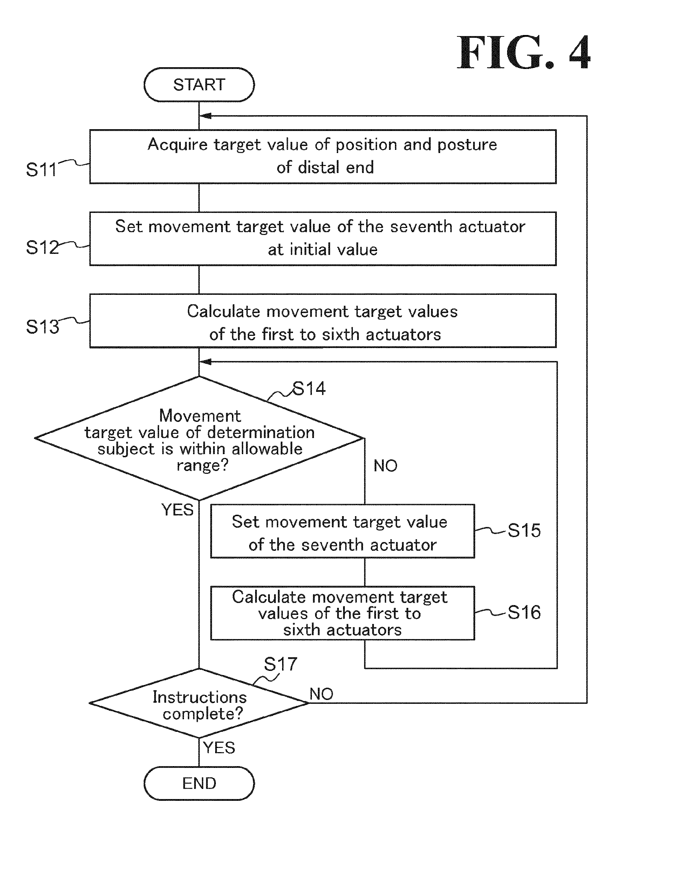

Next, a procedure for forming the movement patterns at step S01 will be described in more detail. As illustrated in FIG. 4, the controller 100 first performs step S11. At step S11, the target acquirer 111 acquires a target value of the position and posture of the distal end 16 from the programming pendant 120.

Next, the controller 100 performs steps S12 and S13. At step S12, the first calculator 112 sets the movement target value of the seventh actuator 27 for distance adjustment at the initial value of the movement target value. For example, the first calculator 112 sets the bending angle of the first arm 13 at 0°. At step S13, under such a condition that the movement target value of the seventh actuator 27 is fixed at the initial value of the movement target value, the first calculator 112 calculates movement target values of the actuators 21 to 26 corresponding to the target value of the position and posture of the distal end 16, and stores calculation results of the actuators 21 to 27 in the accumulator 116.

Next, the controller 100 performs step S14. At step S14, the determiner 113 determines at least one of the actuators 21 to 26 as a determination subject, and makes a determination as to whether the movement target value of the determination-subject actuator is within its allowable range.

When at step S14 the movement target value of at least one determination-subject actuator is determined as being out of the allowable range, the controller 100 performs steps S15 and S16.

At step S15, the second calculator 114 sets a movement target value of the seventh actuator 27 to cause the movement target value of the actuator determined as being out of its allowable range to fall within the allowable range. For example, the second calculator 114 sets such a movement target value of the seventh actuator 27 that incorporates part of the movement target value of the actuator that is determined as being out of its allowable range.

At step S16, the second calculator 114 calculates movement target values of the actuators 21 to 26 corresponding to the target value of the position and posture of the distal end 16 under such a condition that the movement target value of the seventh actuator 27 is fixed at the value set at step S15. The second calculator 114 stores, in the accumulator 116, calculation results of the movement target values of the actuators 21 to 27 and overwrites the last calculation results.

Then, the controller 100 returns the processing to step S14. Thus, steps S14 and S 15 are repeated until all the movement target values of the determination-subject actuators fall within their respective allowable ranges. As a result, the movement target values of the actuators 21 to 27 are calculated to cause the movement target value of the actuator determined as being out of its allowable range to fall within the allowable range.

At steps S15 and S16, the second calculator 114 may calculate movement target values of the actuators 21 to 27 to bend the first arm 13 in a direction in which the seventh axis Ax7 for distance adjustment is moved away from the workpiece W. That is, the controller 100 may control the actuators 21 to 27 to bend the first arm 13 in a direction in which the seventh axis Ax7 is moved away from the workpiece W.

The second calculator 114's procedure for calculating the movement target values of the actuators 21 to 27 should not be construed in a limiting sense. Another possible embodiment is that at step S 15, instead of setting the movement target value of the seventh actuator 27, the movement target value of the actuator determined as being out of its allowable range may be set at a value within the allowable range. Accordingly, at step S16, movement target values of the actuators 21 to 26 except the actuator whose movement target value has been set at step S 15 may be calculated, and also, a movement target value of the seventh actuator 27 may be calculated.

When at step S14 the determiner 113 determines that the movement target values of all the determination-subject actuators are within their respective allowable ranges, the controller 100 performs step S17. At step S17, the controller 100 makes a determination as to whether formation of the movement patterns is complete. Specifically, the target acquirer 111, for example, makes a determination as to whether all of the target value of the position and posture of the distal end 16 required for forming the movement pattern has been acquired. The determination as to whether all of the target value of the position and posture has been acquired is made based on, for example, a completion command input into the programming pendant 120 by the user or a completion command read from a recording medium by the programming pendant 120.

When at step S 17 the controller 100 determines that the formation of the movement pattern is not complete, the controller 100 returns the processing to step S11. Thus, until the formation of the movement pattern is complete, steps S11 to S 17 are repeated to form time-series data of the movement target values of the actuators 21 to 27.

When at step S 17 the controller 100 determines that the formation of the movement pattern is complete, the controller 100 ends the processing.

### Advantageous Effects Provided by Machining Apparatus

As has been described heretofore, the machining apparatus 1 includes the robot 10 and the controller 100. The robot 10 machines a workpiece W. The controller 100 controls the robot 10.

Each robot 10 includes the turnable portion 12, the first arm 13, the second arm 14, the wrist 15, and the distal end 16. The turnable portion 12, the first arm 13, the second arm 14, the wrist 15, and the distal end 16 are coupled in series to each other. The robot 10 further includes the first actuator 21, the second actuator 22, the third actuator 23, the plurality of posture adjustment actuators 24 to 26, and the distance adjustment actuator 27. The first actuator 21 turns the turnable portion 12 about the first axis Ax1. The second actuator 22 swings the first arm 13 about the second axis Ax2. The third actuator 23 swings the second arm 14 about the third axis Ax3. The plurality of posture adjustment actuators 24 to 26 adjust the posture of the distal end 16. The distance adjustment actuator 27 adjusts the distance *L1* between the second axis Ax2 and the third axis Ax3.

The controller 100 includes the target acquirer 111, the first calculator 112, the determiner 113, the second calculator 114, and the outputter 115. The target acquirer 111 acquires a target value of the position and posture of the distal end 16. Under the condition that a movement target value of the seventh actuator 27 for the distance adjustment is fixed, the first calculator 112 calculates movement target values of the actuators 21 to 26 corresponding to the target value of the position and posture. The determiner 113 determines at least one of the actuators 21 to 26 as a determination subject and makes a determination as to whether the movement target value of the determination-subject actuator is within the allowable range. When the movement target value of at least one determination-subject actuator is out of the allowable range, the second calculator 114 calculates movement target values of the actuators 21 to 26 and the seventh actuator 27 for the distance adjustment corresponding to the target value of the position and posture to make the movement target value of the at least one determination-subject actuator fall within the allowable range. The outputter 115 controls the actuators 21 to 27 in accordance with the movement target values.

The robot 10 further includes the seventh actuator 27 for the purpose of distance adjustment, in addition to the actuators 21 to 26 for adjusting the position and posture of the distal end 16. This makes the posture of the robot 10 between the base 11 and the distal end 16 changeable as desired with the position and posture of the distal end 16 maintained as they are.

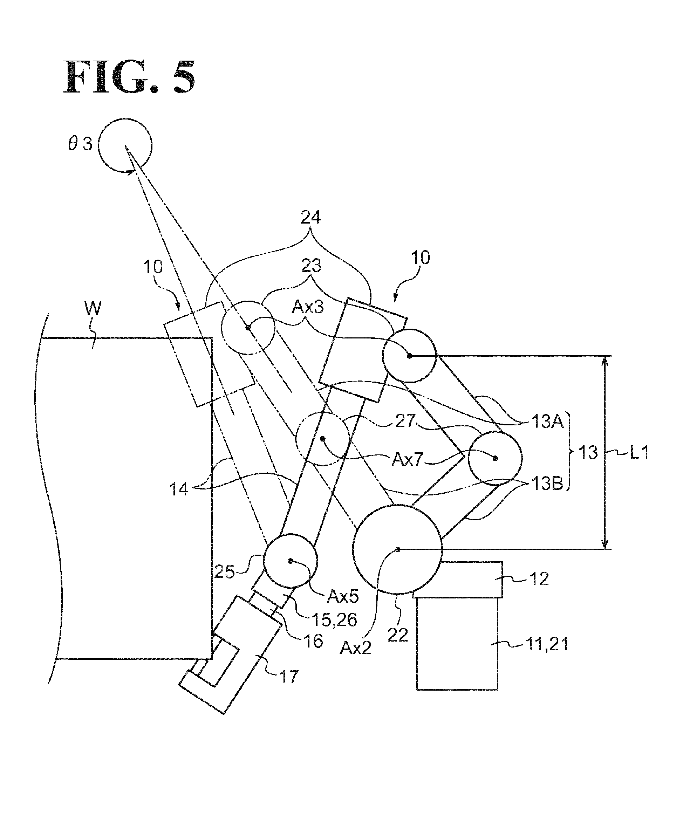

FIG. 5 is a diagram illustrating an exemplary function of the seventh actuator 27. The robot 10 indicated by the phantom line in FIG. 5 is in a state where the end effector 17 is positioned at a to-be-machined portion without bending the first arm 13. The robot 10 indicated by the phantom line is interfering with the workpiece W. In contrast, the robot 10 indicated by the solid line is in a state where the seventh actuator 27 is operated to bend the first arm 13 to shorten the distance between the second axis Ax2 and the third axis Ax3. While maintaining the position and posture of the distal end 16 as they are, the robot 10 indicated by the solid line moves the portions of the robot 10 between the fifth axis Ax5 and the second axis Ax2 away from the workpiece W. In this manner, the robot 10 indicated by the solid line prevents the robot 10 from interfering with the workpiece W.

Making the posture of the robot 10 changeable as desired eliminates or minimizes the robot 10's interference with the workpiece W and surrounding machines and devices. The ability of the robot 10 to avoid interference provides a wider selection of positions for the robot 10. This configuration facilitates construction of production facilities. This configuration also ensures arrangement of the robots 10 with higher density, resulting in shortened work time.

The robot 10 eliminates or minimizes interference with the workpiece W and surrounding machines and devices. Meanwhile, the movement target values of the actuators 21 to 27 corresponding to the target value of the position and posture of the distal end 16 are not determined uniquely. This necessitates setting some constraint conditions at the time of giving movement instructions to the robot 10.

In view of this, the controller 100 first fixes the movement target value of the seventh actuator 27, and under this condition, the controller 100 calculates the movement target values of the actuators 21 to 26. Next, when the movement target value of the determination-subject actuator is out of its allowable range, the controller 100 automatically recalculates the movement target values of the actuators 21 to 26 and the movement target value of the seventh actuator 27 for distance adjustment so as to cause the movement target value of the determination-subject actuator to fall within its allowable range. Keeping the movement amounts of the actuators of the robot 10 within their respective allowable ranges minimizes the movement amount of the robot 10 as a whole. The minimized movement amount of the robot 10 makes the robot 10 less likely to interfere with the workpiece W and surrounding machines and devices.

In the case of the robot 10 indicated by the phantom line in FIG. 5, the movement target value of the third actuator 23 is out of its allowable range. Specifically, the target value, *θ3*, of the swinging angle of the second arm 14 with respect to the first arm 13 is excessive. In contrast, in the case of the robot 10 indicated by the solid line in FIG. 5, the movement target values of the actuators 21 to 26 and the movement target value of the seventh actuator 27 for distance adjustment are recalculated to reduce the target value *θ3* of the swinging angle of the second arm 14 with respect to the first arm 13. Accordingly, the portions of the robot 10 between the fifth axis Ax5 and the second axis Ax2 move away from the workpiece W to prevent the robot 10 from interfering with the workpiece W.

Thus, the movement target value of the determination-subject actuator is kept within its allowable range. Use of this condition decreases the probability of the robot 10's interference with the workpiece W and surrounding machines and devices. This ensures automatic formation of most part of the movement pattern to appropriately position the distal end 16 in the vicinity of each to-be-machined portion while avoiding interference with the workpiece W and surrounding machines and devices. The automatic formation reduces the load involved in giving movement instructions to the robot 10. This further facilitates construction of production facilities.

The machining apparatus 1 further includes the conveyor 30 to convey at least one of the workpiece W and the robot 10 to change the position of the workpiece W relative to the position of the robot 10. In the machining apparatus 1, the conveyor 30 and the robot 10 cooperate with each other to appropriately position the distal end 16 at to-be-machined portions disposed over a wider range. Meanwhile, the relative positions of the workpiece W and the robot 10 are changed, and in accordance with changes in the relative positions, the tendency for the robot 10 to interfere with the workpiece W changes. In view of this, the robot 10 further includes the seventh actuator 27. The seventh actuator 27 makes the posture of the robot 10 changeable as desired. This configuration provides the robot 10 with flexibility to deal with change in the relative positions of the workpiece W and the robot 10 and thus to eliminate or minimize mutual interference of the workpiece W and the robot 10. This further facilitates construction of production facilities.

It is noted that the machining apparatus 1 including the conveyor 30 should not be construed in a limiting sense; it suffices that the machining apparatus 1 includes at least the robot 10 and the controller 100.

The seventh actuator 27 for distance adjustment bends the first arm 13 about the seventh axis Ax7 for distance adjustment to adjust the distance *L1* between the second axis Ax2 and the third axis Ax3. This configuration more readily reduces the movement amounts of the actuators 21 to 26 than simply expanding and contracting the first arm 13 to adjust the distance *L1* between the second axis Ax2 and the third axis Ax3. This configuration also increases the levels of adjustment of the posture of the robot 10, making the robot 10 more readily avoid the workpiece W or surrounding machines and devices. This further facilitates construction of production facilities. It is noted that the seventh actuator 27 may be any other actuator; it suffices that the actuator is capable of adjusting the distance *L1* between the second axis Ax2 and the third axis Ax3. Another possible example of the seventh actuator 27 is a linear actuator to expand and contract the first arm 13.

The seventh axis Ax7 for distance adjustment is parallel to the second axis Ax2. If a robot has a seventh axis Ax7 that is perpendicular to the second axis Ax2, it is necessary to largely move portions of the robot corresponding to the first arm 13 and the second arm 14 sideways (with respect to the workpiece W assumed as front) in order to arrange the distal end 16 at a desired position and posture while avoiding interference of the robot with the workpiece W. Moving the portions sideways may cause interference with surrounding machines and devices (such as an adjacent robot), and thus it is necessary to increase the intervals between the robot and the surrounding machines and devices. The increased intervals may hinder high-density arrangement of a plurality of robots, for example. In contrast, since the seventh axis Ax7 of the robot 10 is parallel to the second axis Ax2, it is not necessary to move the first arm 13 and the second arm 14 sideways at least when the robot 10 makes rotation movement about the seventh axis Ax7. This eliminates or minimizes the robot 10's interference with adjacent machines and devices. This, in turn, provides a wider selection of positions for the robot 10 and thus further facilitates construction of production facilities. Also, a plurality of robots can be arranged with higher density, resulting in further shortened work time. It is noted that the seventh axis Ax7 being parallel to the second axis Ax2 should not be construed in a limiting sense.

The seventh axis Ax7 for distance adjustment is also parallel to the third axis Ax3. This configuration eliminates or minimizes the need for moving the first arm 13 and the second arm 14 sideways in arranging the distal end 16 at a desired position and posture. This further facilitates construction of production facilities. Also, a plurality of robots can be arranged with higher density, resulting in further shortened work time. It is noted that the seventh axis Ax7 being parallel to the third axis Ax3 should not be construed in a limiting sense.

The second calculator 114 may calculate movement target values of the actuators 21 to 27 to bend the first arm 13 in a direction in which the seventh axis Ax7 for distance adjustment is moved away from the workpiece W. That is, the controller 100 may control the actuators 21 to 27 to bend the first arm 13 in a direction in which the seventh axis Ax7 is moved away from the workpiece W. This configuration more reliably eliminates or minimizes the robot 10's interference with the workpiece W, and thus further facilitates construction of production facilities.

The robot 10 is arranged at a position where the robot 10 is able to machine all the to-be-machined portions of the workpiece W without interfering with the workpiece W from the side on which the robot 10 is arranged. This configuration enables a single robot 10 to machine all the to-be-machined portions of the workpiece W from the side on which the single robot 10 is arranged, or enables a plurality of robots 10 arranged on the same side to share all the to-be-machined portions of the workpiece W. This ensures flexibility in constructing production facilities in accordance with the volume of production. It is noted that the arrangement of the robot 10 at a position where the robot 10 is able to machine all the to-be-machined portions should not be construed in a limiting sense.

The plurality of posture adjustment actuators to adjust the posture of the distal end 16 are the fourth actuator 24, the fifth actuator 25, and the sixth actuator 26. The fourth actuator 24 turns the wrist 15 about the fourth axis Ax4. The fifth actuator 25 swings the wrist 15 about the fifth axis Ax5. The sixth actuator 26 turns the distal end 16 about the sixth axis Ax6. The actuators 24 to 26 cooperate with each other to adjust the posture of the distal end 16 as desired. It is noted that the plurality of posture adjustment actuators should not be limited to the actuators 24 to 26; it suffices that the actuators are capable of adjusting the posture of the distal end 16. Another possible embodiment is that any of the fourth actuator 24, the fifth actuator 25, and the sixth actuator 26 is omitted in accordance with the degree of posture adjustment required.

The conveyor 30 conveys the workpiece W, instead of conveying the robot 10, which incorporates a large number of motive power sources. This facilitates the attempt to simplify the configuration of the conveyor 30. This, as a result, further facilitates construction of production facilities. It is noted that insofar as the conveyor 30 changes the position of the workpiece W and the position of the robot 10 relative to each other, the conveyor 30 may convey the robot 10 or may convey both the workpiece W and the robot 10.

The determiner 113 may determine any one of the second actuator 22, the third actuator 23, and the fifth actuator 25 as a determination subject. The amounts by which these actuators move are closely connected in many cases with the amount by which the robot 10 moves as a whole. In view of this, by determining any of these actuators as a determination target and keeping the movable range of the determination-target actuator within its allowable range, the movement amount of the robot 10 as a whole is minimized more reliably. This eliminates or minimizes the robot 10's interference with surrounding machines and devices.

The determiner 113 may determine at least either of the third actuator 23 and the fifth actuator 25 as a determination subject. The amounts by which these actuators move are more closely connected in many cases with the amount by which the robot 10 moves as a whole. In view of this, by determining any of these actuators as a determination target and keeping the movable range of the determination-target actuator within its allowable range, the movement amount of the robot 10 as a whole is minimized more reliably. This more reliably eliminates or minimizes the robot 10's interference with surrounding machines and devices.

The robot 10 may further include, as the end effector 17, a welder attached to the distal end 16. This configuration ensures welding on the to-be-machined portions disposed over a wide area while eliminating or minimizing the robot 10's interference with the workpiece W or surrounding machines and devices.

The machining apparatus 1 includes a plurality of robots 10 disposed on opposite sides of the workpiece W in a direction perpendicular to the conveyance direction of the conveyor 30. Thus, all the to-be-machined portions are assigned to the plurality of robots 10, and this minimizes the movement amounts of the respective robots 10. This configuration more reliably eliminates or minimizes the robots 10's interference with the workpiece W. Also, arranging the robots 10 on opposite sides of the workpiece W in a direction perpendicular to the conveyance direction of the conveyor 30 eliminates or minimizes interference of the robots 10 with each other. This configuration further facilitates construction of production facilities.

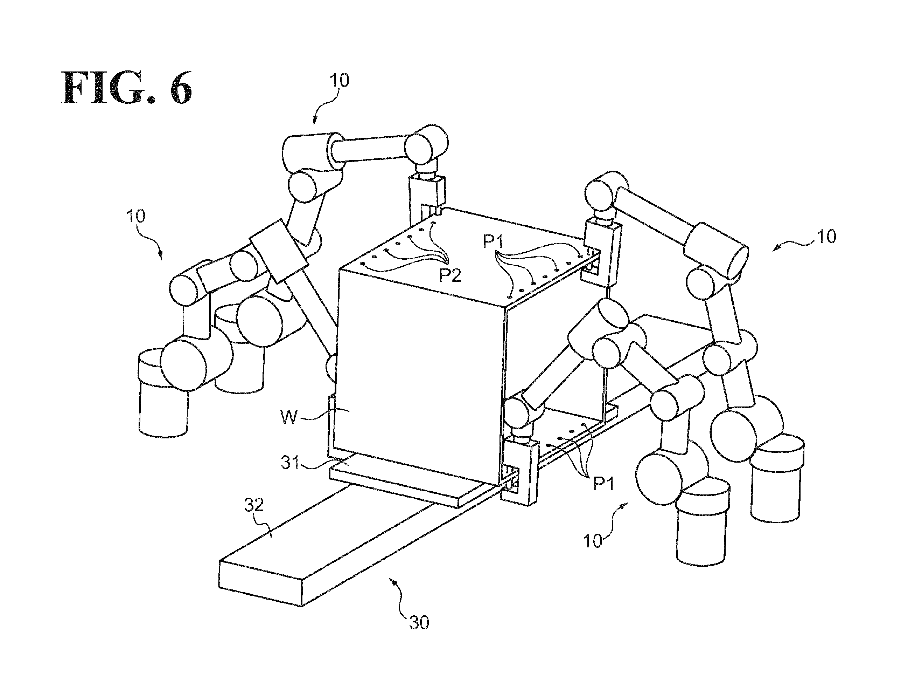

As illustrated in FIG. 6, the machining apparatus 1 may include a plurality of robots 10 disposed side by side in the conveyance direction of the conveyor 30. Each of the robots 10 disposed side by side in the conveyance direction is capable of machining the to-be-machined portions disposed over a wide area, as described above. With this configuration, various patterns can be used to assign to-be-machined portions to the plurality of robots 10 disposed side by side in the conveyance direction. This ensures more efficient construction of the production facilities.

FIG. 6 illustrates two robots 10 disposed side by side in the conveyance direction of the conveyor 30. This configuration, however, should not be construed in a limiting sense. The machining apparatus 1 may include three or more robots 10 disposed side by side in the conveyance direction of the conveyor 30.

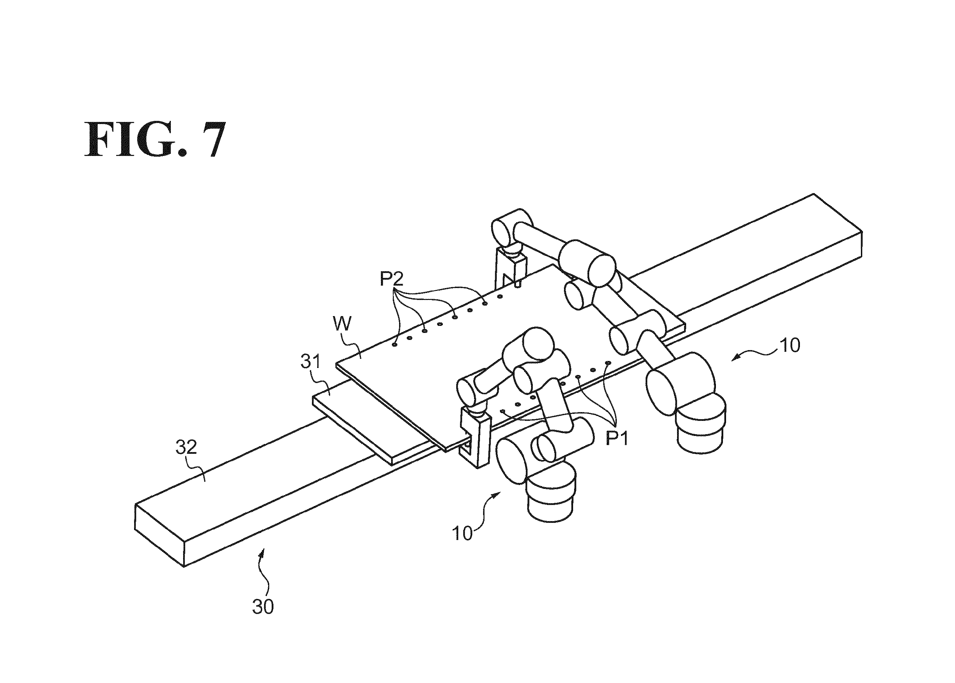

Arranging the plurality of robots 10 on opposite sides of the workpiece W in the direction perpendicular to the conveyance direction of the conveyor 30 should not be construed in a limiting sense. Another possible embodiment is illustrated in FIG. 7, where the robots 10 are disposed on the left side of the workpiece W. In this case as well, the robots 10 may be arranged at positions where the robots 10 are able to machine all the to-be-machined portions without interfering with the workpiece W from the side on which the robots 10 are arranged. For example, as illustrated in FIG. 7, the robots 10 may be arranged at positions where the robots 10 are able to machine all the to-be-machined portions P1 on the left side and all the to-be-machined portions P2 on the right side.

FIG. 7 illustrates two robots 10 disposed side by side in the conveyance direction of the conveyor 30. This configuration, however, should not be construed in a limiting sense. The machining apparatus 1 may include a single robot 10.

The machining apparatus 1 implements a method for producing a workpiece W including: arranging the workpiece W on the pallet 31 for the robot 10 to machine the workpiece W; conveying the pallet 31 using the conveyance actuator 32 to change the position of the workpiece W and the position of the robot 10 relative to each other; and machining the workpiece W using the robot 10.

The machining apparatus 1 also implements a method for producing a workpiece W including: acquiring a target value of the position and posture of the distal end 16; calculating movement target values of the actuators 21 to 26 corresponding to the target value of the position and posture of the distal end 16 under such a condition that the movement target value of the seventh actuator 27 is fixed; determining at least one of the actuators 21 to 26 as a determination subject and determining whether the movement target value of the determination-subject actuator is within its allowable range; when the movement target value of the at least one determination-subject actuator is determined as being out of its allowable range, calculating movement target values of the actuators 21 to 27 corresponding to the target value of the position and posture of the distal end 16 to cause the movement target value of the at least one determination-subject actuator to fall within the movable range; and controlling the actuators 21 to 27 in accordance with their respective movement target values.

The machining apparatus 1 also implements a method for making an instruction including: inputting a target value of the position and posture of the distal end 16 into the controller 100; and storing, in the controller 100, the movement target values of the actuators 21 to 27 calculated by the controller 100 corresponding to the target value of the position and posture of the distal end 16.

Obviously, numerous modifications and variations of the present disclosure are possible in light of the above teachings. It is therefore to be understood that within the scope of the appended claims, the present disclosure may be practiced otherwise than as specifically described herein. For example, the workpiece W of the machining apparatus 1 should not be limited to an automobile body. The machining apparatus 1 is applicable to machining of door panels of automobiles and also applicable to machining and assembling of various parts or products in technical fields other than the automobiles.
- 1: Machining apparatus
- 10: Robot
- 12: Turnable portion
- 13: First arm
- 14: Second arm
- 15: Wrist
- 16: Distal end
- 17: End effector (welder)
- 21: First actuator
- 22: Second actuator
- 23: Third actuator
- 24: Fourth actuator (posture adjustment actuator)
- 25: Fifth actuator (posture adjustment actuator)
- 26: Sixth actuator (posture adjustment actuator)
- 27: Seventh actuator (distance adjustment actuator)
- 100: Controller
- 111: Target acquirer
- 112: First calculator
- 113: Determiner
- 114: Second calculator
- 115: Outputter
- Ax1: First axis
- Ax2: Second axis
- Ax3: Third axis
- Ax4: Fourth axis
- Ax5: Fifth axis
- Ax6: Sixth axis
- Ax7: Seventh axis (axis for distance adjustment)
- *L1*: Distance between the second axis and the third axis
- W: Workpiece

## Claims

1. A machining apparatus (1), **characterized by**:
a robot (10) configured to machine a workpiece, the robot (10) comprising:
a turnable portion (12);
a first arm (13) coupled in series to the turnable portion (12);
a second arm (14) coupled in series to the turnable portion (12) and the first arm (13);
a wrist (15) coupled in series to the turnable portion (12), the first arm (13), and the second arm (14);
a distal end (16) coupled in series to the turnable portion (12), the first arm (13), the second arm (14), and the wrist (15);
a first actuator (21) configured to turn the turnable portion (12) about a first axis;
a second actuator (22) configured to swing the first arm (13) about a second axis;
a third actuator (23) configured to swing the second arm (14) about a third axis;
a plurality of posture adjustment actuators (24, 25, 26) configured to adjust a posture of the distal end (16); and
a distance adjustment actuator (27) configured to adjust a distance between the second axis and the third axis; and
a controller (100) configured to control the robot (10), the controller (100) comprising:
a target acquirer (111) configured to acquire a target value of a position and posture of the distal end (16);
a first calculator (112) configured to, under such a condition that a movement target value of the distance adjustment actuator (27) is fixed, calculate movement target values of the first to third actuators (21, 22, 23) and movement target values of the plurality of posture adjustment actuators (24, 25, 26) corresponding to the target value of the position and posture of the distal end (16);
a determiner (113) configured to determine at least one actuator among the first to third actuators (21, 22, 23) and the plurality of posture adjustment actuators (24, 25, 26) as a determination subject, and configured to make a determination as to whether a movement target value of the at least one actuator determined as the determination subject is within an allowable range;
a second calculator (114) configured to, when the movement target value of the at least one actuator determined as the determination subject is out of the allowable range, calculate the movement target values of the first to third actuators (21, 22, 23), the movement target values of the plurality of posture adjustment actuators (24, 25, 26), and the movement target value of the distance adjustment actuator (27) corresponding to the target value of the position and posture of the distal end (16) so as to cause the movement target value of the at least one actuator determined as the determination subject to fall within the allowable range; and
an outputter (115) configured to control the first to third actuators (21, 22, 23), the plurality of posture adjustment actuators (24, 25, 26), and the distance adjustment actuator (27) in accordance with the respective movement target values of the first to third actuators (21, 22, 23), the plurality of posture adjustment actuators (24, 25, 26), and the distance adjustment actuator (27).

2. The machining apparatus (1) according to claim 1, wherein the distance adjustment actuator (27) is configured to bend the first arm (13) about an axis for distance adjustment to adjust the distance between the second axis and the third axis.

3. The machining apparatus (1) according to claim 2, wherein the axis for distance adjustment is parallel to the second axis.

4. The machining apparatus (1) according to claim 3, wherein the axis for distance adjustment is parallel to the third axis.

5. The machining apparatus (1) according to any one of claims 2 to 4, wherein the second calculator (114) is configured to calculate the movement target values of the first to third actuators (21, 22, 23), the movement target values of the plurality of posture adjustment actuators (24, 25, 26), and the movement target value of the distance adjustment actuator (27) to bend the first arm (13) in a direction in which the axis for distance adjustment is moved away from the workpiece.

6. The machining apparatus (1) according to any one of claims 1 to 5, wherein the plurality of posture adjustment actuators comprise
a fourth actuator (24) configured to turn the wrist (15) about a fourth axis,
a fifth actuator (25) configured to swing the wrist (15) about a fifth axis, and
a sixth actuator (26) configured to turn the distal end (16) about a sixth axis.

7. The machining apparatus (1) according to claim 6, wherein the determiner (113) is configured to determine at least one actuator among the second actuator (22), the third actuator (23), and the fifth actuator (25) as the determination subject.

8. The machining apparatus (1) according to claim 7, wherein the determiner (113) is configured to determine at least one actuator among the third actuator (23) and the fifth actuator (25) as the determination subject.

9. The machining apparatus (1) according to any one of claims 1 to 8, further comprising a welder (17) attached to the distal end (16).

10. A machining apparatus (1), **characterized by**:
a robot (10) configured to machine a workpiece, the robot (10) comprising:
a turnable portion (12);
a first arm (13) coupled in series to the turnable portion (12);
a second arm (14) coupled in series to the turnable portion (12) and the first arm (13);
a wrist (15) coupled in series to the turnable portion (12), the first arm (13), and the second arm (14);
a distal end (16) coupled in series to the turnable portion (12), the first arm (13), the second arm (14), and the wrist (15);
a first actuator (21) configured to turn the turnable portion (12) about a first axis;
a second actuator (22) configured to swing the first arm (13) about a second axis;
a third actuator (23) configured to swing the second arm (14) about a third axis;
a plurality of posture adjustment actuators (24, 25, 26) configured to adjust a posture of the distal end (16); and
a distance adjustment actuator (27) configured to adjust a distance between the second axis and the third axis; and
a controller (100) configured to:
acquire a target value of a position and posture of the distal end (16);
calculate, under such a condition that a movement target value of the distance adjustment actuator (27) is fixed, movement target values of the first to third actuators (21, 22, 23) and movement target values of the plurality of posture adjustment actuators (24, 25, 26) corresponding to the target value of the position and posture of the distal end (16);
determine at least one actuator among the first to third actuators (21, 22, 23) and the plurality of posture adjustment actuators (24, 25, 26) as a determination subject, and make a determination as to whether a movement target value of the at least one actuator determined as the determination subject is within an allowable range;
calculate, when the movement target value of the at least one actuator determined as the determination subject is out of the allowable range, the movement target values of the first to third actuators (21, 22, 23), the movement target values of the plurality of posture adjustment actuators (24, 25, 26), and a movement target values of the distance adjustment actuator (27) corresponding to the target value of the position and posture of the distal end (16) so as to cause the movement target value of the at least one actuator determined as the determination subject to fall within the allowable range; and
control the first to third actuators (21, 22, 23), the plurality of posture adjustment actuators (24, 25, 26), and the distance adjustment actuator (27) in accordance with the respective movement target values of the first to third actuators (21, 22, 23), the plurality of posture adjustment actuators (24, 25, 26), and the distance adjustment actuator (27), so as to control the robot (10).

11. A method for making an instruction using the machining apparatus (1) according to any one of claims 1 to 10, **characterized by**:
inputting the target value of the position and posture of the distal end (16) into the controller (100); and
storing, in the controller (100), the movement target values of the first to third actuators (21, 22, 23), the movement target values of the plurality of posture adjustment actuators (24, 25, 26), and the movement target value of the distance adjustment actuator (27) corresponding to the target value of the position and posture of the distal end (16), after the movement target values have been calculated by the controller (100).

12. A method for producing a workpiece using a robot (10), the robot (10) comprising:
a turnable portion (12);
a first arm (13) coupled in series to the turnable portion (12);
a second arm (14) coupled in series to the turnable portion (12) and the first arm (13);
a wrist (15) coupled in series to the turnable portion (12), the first arm (13), and the second arm (14);
a distal end (16) coupled in series to the turnable portion (12), the first arm (13), the second arm (14), and the wrist (15);
a first actuator (21) configured to turn the turnable portion (12) about a first axis;
a second actuator (22) configured to swing the first arm (13) about a second axis;
a third actuator (23) configured to swing the second arm (14) about a third axis;
a plurality of posture adjustment actuators (24, 25, 26) configured to adjust a posture of the distal end (16); and
a distance adjustment actuator (27) configured to adjust a distance between the second axis and the third axis,
the method **characterized by**:
acquiring a target value of a position and posture of the distal end (16);
under such a condition that a movement target value of the distance adjustment actuator (27) is fixed, calculating movement target values of the first to third actuators (21, 22, 23) and movement target values of the plurality of posture adjustment actuators (24, 25, 26) corresponding to the target value of the position and posture of the distal end (16);
determining at least one actuator among the first to third actuators (21, 22, 23) and the plurality of posture adjustment actuators (24, 25, 26) as a determination subject, and making a determination as to whether a movement target value of the at least one actuator determined as the determination subject is within an allowable range;
when the movement target value of the at least one actuator determined as the determination subject is out of the allowable range, calculating the movement target values of the first to third actuators (21, 22, 23), the movement target values of the plurality of posture adjustment actuators (24, 25, 26), and the movement target value of the distance adjustment actuator (27) corresponding to the target value of the position and posture of the distal end (16) so as to cause the movement target value of the at least one actuator determined as the determination subject to fall within the allowable range; and
controlling the first to third actuators (21, 22, 23), the plurality of posture adjustment actuators (24, 25, 26), and the distance adjustment actuator (27) in accordance with the respective movement target values of the first to third actuators (21, 22, 23), the plurality of posture adjustment actuators (24, 25, 26), and the distance adjustment actuator (27).

13. A controller (100), **characterized by**:
a target acquirer (111) configured to acquire a target value of a position and posture of a distal end (16) of a robot (10), the robot (10) comprising:
a turnable portion (12);
a first arm (13) coupled in series to the turnable portion (12);
a second arm (14) coupled in series to the turnable portion (12) and the first arm (13);
a wrist (15) coupled in series to the turnable portion (12), the first arm (13), and the second arm (14);
a distal end (16) coupled in series to the turnable portion (12), the first arm (13), the second arm (14), and the wrist (15);
a first actuator (21) configured to turn the turnable portion (12) about a first axis;
a second actuator (22) configured to swing the first arm (13) about a second axis;
a third actuator (23) configured to swing the second arm (14) about a third axis;
a plurality of posture adjustment actuators (24, 25, 26) configured to adjust a posture of the distal end (16); and
a distance adjustment actuator (27) configured to adjust a distance between the second axis and the third axis;
a first calculator (112) configured to, under such a condition that a movement target value of the distance adjustment actuator (27) is fixed, calculate movement target values of the first to third actuators (21, 22, 23) and movement target values of the plurality of posture adjustment actuators (24, 25, 26) corresponding to the target value of the position and posture of the distal end (16);
a determiner (113) configured to determine at least one actuator among the first to third actuators (21, 22, 23) and the plurality of posture adjustment actuators (24, 25, 26) as a determination subject, and configured to make a determination as to whether a movement target value of the at least one actuator determined as the determination subject is within an allowable range;
a second calculator (114) configured to, when the movement target value of the at least one actuator determined as the determination subject is out of the allowable range, calculate the movement target values of the first to third actuators (21, 22, 23), the movement target values of the plurality of posture adjustment actuators (24, 25, 26), and the movement target value of the distance adjustment actuator (27) corresponding to the target value of the position and posture of the distal end (16) so as to cause the movement target value of the at least one actuator determined as the determination subject to fall within the allowable range; and
an outputter (115) configured to control the first to third actuators (21, 22, 23), the plurality of posture adjustment actuators (24, 25, 26), and the distance adjustment actuator (27) in accordance with the respective movement target values of the first to third actuators (21, 22, 23), the plurality of posture adjustment actuators (24, 25, 26), and the distance adjustment actuator (27).

14. A method for control, **characterized by**:
acquiring a target value of a position and posture of a distal end (16) of a robot (10), the robot (10) comprising:
a turnable portion (12);
a first arm (13) coupled in series to the turnable portion (12);
a second arm (14) coupled in series to the turnable portion (12) and the first arm (13);
a wrist (15) coupled in series to the turnable portion (12), the first arm (13), and the second arm (14);
a distal end (16) coupled in series to the turnable portion (12), the first arm (13), the second arm (14), and the wrist (15);
a first actuator (21) configured to turn the turnable portion (12) about a first axis;
a second actuator (22) configured to swing the first arm (13) about a second axis;
a third actuator (23) configured to swing the second arm (14) about a third axis;
a plurality of posture adjustment actuators (24, 25, 26) configured to adjust a posture of the distal end (16); and
a distance adjustment actuator (27) configured to adjust a distance between the second axis and the third axis;
under such a condition that a movement target value of the distance adjustment actuator (27) is fixed, calculating movement target values of the first to third actuators (21, 22, 23) and movement target values of the plurality of posture adjustment actuators (24, 25, 26) corresponding to the target value of the position and posture of the distal end (16);
determining at least one actuator among the first to third actuators (21, 22, 23) and the plurality of posture adjustment actuators (24, 25, 26) as a determination subject, and making a determination as to whether a movement target value of the at least one actuator determined as the determination subject is within an allowable range;
when the movement target value of the at least one actuator determined as the determination subject is out of the allowable range, calculating the movement target values of the first to third actuators (21, 22, 23), the movement target values of the plurality of posture adjustment actuators (24, 25, 26), and the movement target value of the distance adjustment actuator (27) corresponding to the target value of the position and posture of the distal end (16) so as to cause the movement target value of the at least one actuator determined as the determination subject to fall within the allowable range; and
controlling the first to third actuators (21, 22, 23), the plurality of posture adjustment actuators (24, 25, 26), and the distance adjustment actuator (27) in accordance with the respective movement target values of the first to third actuators (21, 22, 23), the plurality of posture adjustment actuators (24, 25, 26), and the distance adjustment actuator (27).
